(19) Europäisches Patentamt
European Patent Office
Office européen des brevets

(11) Veröffentlichungsnummer: **0 090 225**
**A2**

(12) **EUROPÄISCHE PATENTANMELDUNG**

(21) Anmeldenummer: **83102399.9**

(51) Int. Cl.³: **C 25 D 13/06**

(22) Anmeldetag: **11.03.83**

(30) Priorität: **23.03.82 DE 3210540**

(43) Veröffentlichungstag der Anmeldung: **05.10.83 Patentblatt 83/40**

(84) Benannte Vertragsstaaten: **AT BE DE FR GB NL SE**

(71) Anmelder: **BASF Aktiengesellschaft, Carl-Bosch-Strasse 38, D-6700 Ludwigshafen (DE)**

(72) Erfinder: **Gulbins, Erich, Dr., Ladenburger Strasse 80, D-6900 Heidelberg (DE)**
Erfinder: **Haardt, Axel, Holzstrasse 12, D-6806 Viernheim (DE)**
Erfinder: **Sabelus, Guenther, Dr., Neustadter Strasse 25, D-6715 Lambsheim (DE)**

(54) **Kathodisch abscheidbare Elektrotauchlacke, Verfahren zu ihrer Herstellung und Verwendung.**

(57) Die Erfindung betrifft kathodisch abscheidbare Elektrotauchlacke, ihre Herstellung und Verwendung.

Diese Elektrotauchlacke bestehen aus Bindemitteln auf Basis stickstoffbasische Gruppen tragender Polyadditions-, Polykondensations- oder Polymerisationsprodukte, die durch Zusatz von Säuren wasserverdünnbar sind, gegebenenfalls Pigmenten und/oder Füllstoffen in üblichen Bindemittel/Pigment-Verhältnissen sowie gegebenenfalls andere Hilfsstoffe und Wasser enthalten und einen Zusatz von elementarem Schwefel und/oder einer oder mehrerer organischer, N-haltiger Thioverbindungen mit Gruppierungen der Formeln

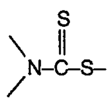 (I) und/oder 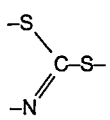 (II)

enthalten.

Diese Elektrotauchlacke werden zur kathodischen Elektrotauchlackierung von Metallteilen verwendet.

EP 0 090 225 A2

# Kathodisch abscheidbare Elektrotauchlacke, Verfahren zu ihrer Herstellung und Verwendung

Die Erfindung betrifft kathodisch abscheidbare Elektrotauchlacke, die durch Säurezusatz wasserverdünnbare stickstoffbasische Gruppen tragende Bindemittel, Pigmente und/oder Füllstoffe sowie gegebenenfalls andere Hilfsstoffe und Wasser enthalten, Verfahren zu ihrer Herstellung und ihre Verwendung.

Im allgemeinen werden elektrisch leitende Werkstücke vor der elektrophoretischen Beschichtung einer Vorbehandlung unterworfen, um der zu beschichtenden Oberfläche einen ausreichenden Korrosionsschutz und dem darauf abgeschiedenen Überzug eine genügend hohe Haftung zu vermitteln. Eine derartige, nach verschiedenen Verfahren gewonnene Phosphatierungs-Vorbehandlung kann verfahrensbedingt störanfällig und uneinheitlich hinsichtlich der Einhaltung von Schichtgewicht, Gefüge, etc. sein. Bei der Tauchphosphatierung besteht zudem die Gefahr des Eintrags von unerwünschten Fremdionen aus dem Phosphatierbad in das anschließende Elektrotauchbad, während bei der Spritzphosphatierung schwer zugängliche Stellen, wie z.B. Hohlräume nur unvollständig oder überhaupt nicht durch die Phosphatierung geschützt werden. Somit hängt die Qualität der Elektrotauchlackierung, insbesondere der Korrosionsschutz, weitgehend von der Qualität der Vorbehandlung der Metalloberflächen ab.

Eine wesentliche Verbesserung dieser Nachteile konnte dadurch erzielt werden, daß dem Beschichtungsbad Metallionen aus im Beschichtungsbad gelösten Metallsalzen zugesetzt wurden (DE-OS 24 57 437); dabei ist deren Potential in der elektrochemischen Spannungsreihe der Kationen höher

Ls/P

als das Potential der Eisenmetalloberfläche. Dieses Verfahren ist jedoch nicht für alle zur Zeit bekannten Bindemittel geeignet. So zeigen Kupferionen eine signifikante Korrosionsschutzwirkung insbesondere in Elektrotauchlacken, die auf Bindemitteln des Mannich-Basen-Typs aufgebaut sind. Für die spezifische Wirkungsweise der Kupferionen auf den Korrosionsschutz wird eine Komplexbildung mit den Mannich-Basen-Funktionen des Bindemittels oder ähnlichen, in beliebigen Bindemitteln enthaltenen und zur Komplexbildung befähigten Gruppierungen angenommen.

Ferner muß die Dosierung der Metallsalze exakt verfolgt werden, da mit steigendem Gehalt, z.B. von Cu-Ionen, wohl der Korrosionsschutz verbessert wird, gleichzeitig aber Oberflächenstörungen im eingebrannten Lackfilm auftreten können.

Darüber hinaus verursacht der Zusatz von Metallionen zum Elektrotauchlack in vielen Fällen zusätzliche Verarbeitungsschritte und damit zusätzliche Kosten, da aus den Abwässern der Anlagen die oft als Zellgifte wirksamen Metallionen (Cu, Pb) chemisch entfernt werden müssen.

Aufgabe der vorliegenden Erfindung war es, die o.g. Nachteile zu vermeiden, gegebenenfalls auf eine Vorbehandlung durch Phosphatierung zu verzichten, ohne dabei die Korrosionsschutzwirkung des Elektrotauchüberzuges zu verschlechtern.

Überraschenderweise können die genannten Nachteile dadurch vermieden werden, daß man Elektrotauchbäder verwendet, die bestimmte Mengen organischer, N-haltiger Thioverbindungen und/oder elementaren Schwefels enthalten.

Darüber hinaus können bei Kombinationen organischer, N-haltiger Thioverbindungen mit Metallsalzen synergistische Verbesserungen des Korrosionsschutzes erzielt werden.

Gegenstand der vorliegenden Erfindung sind kathodisch abscheidbare Elektrotauchlacke, bestehend aus Bindemitteln auf Basis stickstoffbasische Gruppen tragender Polyadditions-, Polykondensations- oder Polymerisationsprodukte, die durch Zusatz von Säuren wasserverdünnbar sind, gegebenenfalls Pigmenten und/oder Füllstoffen in üblichen Bindemittel/Pigment-Verhältnissen sowie gegebenenfalls anderen Hilfsstoffen und Wasser, die dadurch gekennzeichnet sind, daß sie einen Zusatz von elementarem Schwefel und/oder eines oder mehrerer organischer, N-haltiger Thioverbindungen mit Gruppierungen der Formeln

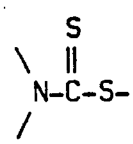 (I) und/oder 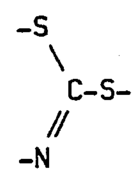 (II)

enthalten.

Bevorzugt beträgt der Gehalt der Elektrotauchlacke an elementarem Schwefel und/oder Derivaten organischer, N-haltiger Thioverbindungen 0,005 bis 5, insbesondere 0,1 bis 2 Gew.%, bezogen auf Bindemittel.

Bevorzugt ist außerdem die Verwendung solcher Bindemittel auf Basis stickstoffbasische Gruppen tragender Polyadditions-, Polykondensations- oder Polymerisationsprodukte, die weniger als ein Äquivalent an olefinischen Doppelbindungen/1000 g enthalten.

Besonders bevorzugte organische, N-haltige Thioverbindungen sind z.B. Metallsalze von N-disubstituierten

Dithiocarbaminsäuren sowie Thiuram- und Thiazolderivate.

Gegenstand der vorliegenden Erfindung ist auch ein Verfahren zur Herstellung wäßriger kathodisch abscheidbarer Elektrotauchlacke, wobei dem Elektrotauchlack, dem Bindemittel, den Pigmenten oder Füllstoffen, vorzugsweise bei der Herstellung der pigmentierten Mahlpaste oder des Lackkonzentrats, elementarer Schwefel und/oder ein oder mehrere organische, N-haltige Thioverbindungen mit Gruppierungen der Formeln (I) und/oder (II) in solchen Mengen zugefügt und darin dispergiert werden, so daß der Gehalt an elementarem Schwefel und/oder N-haltigen, organischen Thioverbindungen 0,005 bis 5 Gew.%, bezogen auf das Bindemittel, beträgt.

Gegenstand der vorliegenden Erfindung ist außerdem die Verwendung dieser Elektrotauchlacke zur kathodischen Elektrotauchlackierung von Metallteilen oder zum Lackieren von Gegenständen unter Anwendung anderer Lackierverfahren.

Die erfindungsgemäßen kathodisch abscheidbaren Elektrotauchlacke können zusätzlich Metallsalze der in der DE-AS 24 57 437 genannten Art und Menge enthalten.

Das erfindungsgemäße Beschichtungsbad dient vorzugsweise zur Herstellung von Überzügen auf als Kathode geschalteten Eisenmetall-Oberflächen durch Kataphorese und anschließendes Härten des Überzugs. Die Überzüge auf der Eisenmetall-Oberfläche können dadurch erzielt werden, daß die Substratfläche "unter Strom" in das ET-Bad eintaucht oder aber zunächst stromlos und erst nach dem Eintauchen die elektrophoretische Abscheidung beginnt. Auch kann vor der kataphoretischen Beschichtung ein Besprühen oder Bespritzen der Metalloberfläche mit dem erfindungsgemäßen Bad-Material erfolgen.

Als organische N-haltige Thioverbindungen mit Gruppierungen der Formeln (I) und/oder (II) eignen sich beispielsweise N-disubstituierte Dithiocarbaminsäuren und/oder ihre Derivate, Thiuramderivate und Thiazolderivate, wie:

1. Metallsalze von N-disubstituierten Dithiocarbaminsäuren der allgemeinen Formel (III)

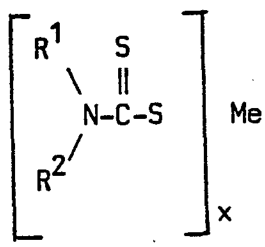 (III)

worin Me für ein 1- bis 4-, vorzugsweise 2- bis 3-wertiges Metallkation, insbesondere ein zweiwertiges Metallkation, wie z.B. für Zn, Se, Te, Pb, Cu, Ca, Cd oder auch dreiwertige Metallkationen wie z.B. Bi steht; $R^1$ und $R^2$ untereinander gleich oder verschieden sind und für einen 1 bis 8 Kohlenstoffatome enthaltenden Alkylrest, wie z.B. für einen $CH_3$-; $C_2H_5$-; n-$C_3H_7$-; n-$C_4H_9$-; n-$C_5H_{11}$-; einen 5- oder 6-gliedrigen Cycloalkylrest, wie Cyclohexyl- oder einen Aryl- bzw. Aralkylrest, wie z.B. einen $C_6H_5$-Rest oder $C_6H_5$-$CH_2$--Rest; stehen oder $R^1$ mit $R^2$ zu einem 5- oder 6-gliedrigen

Ring verbunden sind, wie z.B. einen 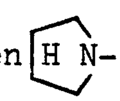-, 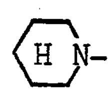- oder

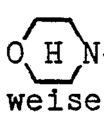-Rest und X für eine Zahl von 1 bis 4, vorzugsweise 2 bis 3, steht, die der Wertigkeit des Metallkations entspricht.

Beispiele für derartige, geeignete Verbindungen sind Zink-Phenyl-ethyl-dithiocarbamat, Zn-dimethyl-dithio-carbamat, Zn-diethyl-dithio-carbamat, Zn-N-penta-methylen-dithiocarbamat, Gemische dieser Verbindungen oder auch die entsprechenden Cd-, Ca- oder Bi-salze.

Außerdem eignen sich Derivate von N-disubstituierten Dithiocarbaminsäuren, die keine Metallsalze sind, wie z.B.

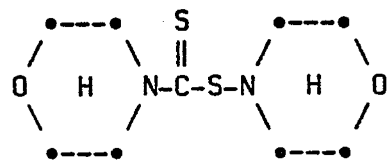

2. Thiuram-Derivate der allgemeinen Formel (IV),

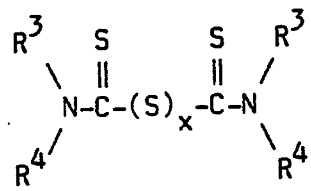

(IV)

worin $R^3$ und $R^4$ untereinander gleich oder verschieden sind und die gleiche Bedeutung wie die oben angegebenen Reste $R^1$ und $R^2$ haben, z.B. für die Reste $CH_3-$, $C_2H_5-$, $C_3H_7-$, $C_4H_9-$, $C_6H_5-$, $C_6H_5-CH_2-$ stehen oder der Rest $\genfrac{}{}{0pt}{}{R^3}{R^4}>N-$ durch den Rest 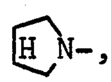, 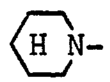, 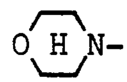 ersetzt ist, und X für eine Zahl von 1 bis 10, insbesondere 1, 2 oder 4 steht. Beispiele sind Tetraalkyl-, symm. subst. Bis-(alkyl-aryl)-, cyclische Thiuram-mono-, -di-, -tetra-, und -polysulfide, wie Tetramethylthiurammonosulfid, Tetramethylthiuramdisulfid; Di-(methyl-phenyl)-Thiuramdisulfid, Di-penta-methylen--Thiuramtetrasulfid oder deren Gemische.

3. Thiazol-Derivate der allgemeinen Formel (V)

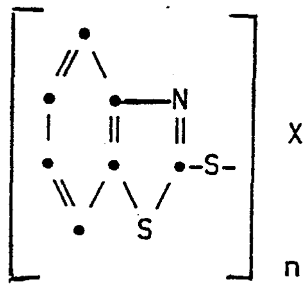

(V)

worin
X für H und n = 1,
X für Zn und n = 2 oder
X für den Mercaptobenzthiazylrest und n = 1 steht,
z.B. 2-Mercapto-Benzothiazol, das Zn-Salz des 2-Mercaptobenzthiazols; Dibenzothiazyldisulfid oder deren Gemische;
oder X für einen N-disubstituierten Rest und n für 1 steht: wie z.B. Thiazyl-2-(N-disubstituierte)-Sulfenamide und ihre Derivate der allgemeinen Formel (VI)

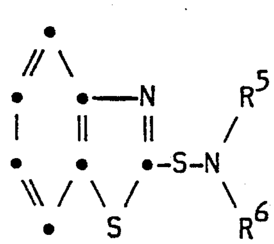

(VI)

worin $R^5$ und $R^6$ untereinander gleich oder verschieden sind, die gleiche Bedeutung wie $R^1$ und $R^2$ haben, z.B. für einen $C_2H_5$-, $C_6H_{11}$-, n-$C_3H_7$- oder t-$C_4H_9$-Rest stehen oder $R^5$ für H und $R^6$ für einen $C_4H_9$-Rest stehen oder der Rest $-N{<}^{R^5}_{R^6}$ durch den Rest 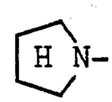-,

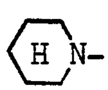- oder 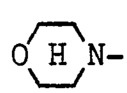- ersetzt ist.

Beispiele für derartige geeignete Verbindungen sind Benzothiazyl-2-N,N-diethylsulfenamid; Benzothiazyl-2--N,N-diisopropyl-sulfenamid; Benzothiazyl-2-N-morpholin-sulfenamid; Benzothiazyl-2-N-Cyclohexyl-sulfenamid; Benzothiazyl-2-N,N-dicyclohexylsulfenamid.

Diese und andere, hier nicht namentlich aufgeführten N-haltigen Thioverbindungen mit Gruppierungen der Formeln (I) und/oder (II) können als chemische Einzelverbindungen, im Gemisch miteinander, und/oder in Kombination mit elementarem Schwefel zum Einsatz kommen, gegebenenfalls auch in Kombination mit Aktivatoren wie ZnO, Zn-Stearat o.ä. oder auch Verzögerern (wie z.B. Phthalsäureanhydrid oder Benzoesäure).

Als Bindemittel für die erfindungsgemäßen kathodisch abscheidbaren Elektrotauchlacke eignen sich die üblichen stickstoffbasische Gruppen tragenden gegebenenfalls auch amphoteren Polyadditions-, Polykondensations- oder Polymerisationsprodukte, die durch Zusatz von Säuren wasserlöslich oder wasserdispergierbar werden, sowie Kombinationen derartiger Produkte.

Für die Herstellung dieser kationischen Filmbildner wird kein Schutz begehrt. Beispielsweise werden solche Produkte beschrieben in DE-AS 12 76 260, DE-OS 22 52 536, DE-OS 23 20 301, DE-OS 23 57 075, DE-OS 27 11 425 oder in GB-PS 1 303 480, BE-PS 804 072, DE-AS 20 57 799, DE-AS 20 59 587, DE-AS 23 39 398, DE-AS 25 31 960, DE-OS 28 45 988, DE-OS 29 11 242, DE-OS 29 11 243, DE-OS 29 14 297, DE-OS 29 42 488 und in der deutschen Patentanmeldung P 30 21 300.4.

Bevorzugt sind solche kationischen Filmbildner (Bindemittel), die weniger als 1 Äquivalent an olefinischen

Doppelbindungen/1000 g Bindemittel enthalten.

Auch für die Herstellung der wäßrigen Lösungen bzw. wäßrigen Dispersionen von Salzen derartiger kationischer Produkte wird kein Schutz begehrt. Sie erfolgt in üblicher Weise nach den üblichen Methoden. Im allgemeinen ist es zweckmäßig, den pH-Wert der Lösungen bzw. Dispersionen auf einen Wert zwischen 3 bis höchstens 10, vorzugsweise zwischen 4 und 9 einzustellen. Als Säurekomponente sind praktisch alle bekannten anorganischen, wie z.B. Schwefelsäure, Salpetersäure, Salzsäure, Kohlensäure, Borsäure, Phosphorsäure (oder ihre Derivate) und/oder organischen Säuren, wie z.B. Ameisensäure, Essigsäure, Propionsäure, Milchsäure, Trichloressigsäure, Oxalsäure u.a. brauchbar.

Ferner kann in besonders gelagerten Fällen, wenn z.B. durch Cu-Ionenzusatz gemäß DE-OS 24 57 437 zu einem Bindemittel, das z.B. gemäß DE-OS 23 20 301 auf einem Mannich--Basen-Kondensationsprodukt aufgebaut ist, ein bereits guter Korrosionsschutz der nicht vorbehandelten, also nicht phosphatierten Metalloberflächen durch die eingebrannte Elektrotauchbeschichtung erzielt wird, durch erfindungsgemäßen Zusatz geeigneter organischer Schwefelverbindungen der Korrosionsschutz noch weiter verbessert werden. Bei der Auswahl derartiger Verbindungen muß auf Verträglichkeit der organischen Thioverbindungen mit $Cu/Cu^{++}$ geachtet werden, so daß hierfür nur relativ wenige Substanzen geeignet sind. Erfindungsgemäß bevorzugt wird die Verwendung von Thiuram-Derivaten, wie z.B. Tetramethyl--Thiuramdisulfid in $Cu/Cu^{++}$-haltigen Elektrotauchlacken auf Basis von Bindemitteln, wie sie z.B. in DE-OS 23 20 301, DE-OS 26 36 797, DE-OS 27 51 498; DE-OS 27 51 499, DE-OS 27 55 906, DE-OS 27 55 907, DE-OS 27 55 908, DE-OS 27 44 360, DE-OS 29 42 488, sowie den deutschen Patentanmeldungen P 30 21 300.4, P 31 32 024.5, P 31 23 968.4, P 31 24 088.7 und P 31 24 089 beschrieben werden.

Im wäßrigen ET-Bad können die kationischen Bindemittel entweder allein oder in Kombination mit anderen, in Wasser löslichen bzw. in Wasser dispergierbaren und im Gemisch mit dem kationischen Bindemittel kataphoretisch abscheidbaren Kunstharzen enthalten sein, wie z.B. in Kombination mit Aminoplastvorkondensaten, Polyurethanen, Epoxidharzen, Phenoplast-Kondensaten und/oder Alkydharzen. Wie üblich können im ET-Bad ebenfalls elektrophoretisch abscheidbare Pigmente und/oder Füllstoffe in üblichen Bindemittel/Pigment-Verhältnissen sowie Hilfsstoffe, wie Härter, Verlaufsverbesserer, Antischaummittel, Haftverbesserer o.ä. enthalten sein.

Ebenso können - je nach Bedarf - zusätzliche Lösungsmittel, also z.B. Alkohole wie Isopropanol, Ethanol, Butanol, Decanol o.ä., Ether, z.B. Tetrahydrofuran, Ester, Etherester u.ä. mitverwendet werden.

Für einen wirkungsvollen Effekt kann die Gesamtmenge an den erfindungsgemäß verwendeten N-haltigen Thioverbindungen gering gehalten werden. Es genügen bereits Mengen von 0,005 bis 5 Gew.%, vorzugsweise von 0,5 bis 2 Gew.%, bezogen auf das bzw. die im ET-Bad enthaltenen, kationischen Bindemittel (100%ig). Die Verbindungen können in den kationischen Bindemitteln gelöst oder dispergiert werden und beeinflußen oder beeinträchtigen die weiteren Manipulationen, wie Mahlung, Protonierung etc., nicht. Eine andere, bevorzugte Art der Einarbeitung besteht in der Zugabe der benötigten Mengen der erfindungsgemäß zu verwendenden Schwefelverbindungen zum Mahlgut bei der Herstellung der Mahlpasten und der Lackkonzentrate, wobei nach an sich bekannten Methoden wie der Anreibung auf dem Dreiwalzenstuhl oder in der Sandmühle oder Kugelmühle verfahren werden kann.

Auch ein nachträgliches Einarbeiten durch intensives Rühren in den fertig hergestellten, zur ET-Beschichtung bereiten Elektrotauchlack ist möglich, aber bisweilen wegen des Risikos einer ungleichmäßigen Verteilung im ET-Lack weniger empfehlenswert.

Die Art und Weise sowie die Bedingungen der kataphoretischen Beschichtung sind die in der Praxis üblichen und entsprechen dem Stand der Technik: Dasselbe gilt für alle Manipulationen, die sich an die eigentliche elektrophoretische Beschichtung anschließen und denen das beschichtete Substrat und das ET-Badmaterial unterworfen werden (also z.B. Spülen, Sprühen, Ablüften und Einbrennen der beschichteten Substrate oder Rückführen des vom beschichteten und aus dem Becken entfernten Substrates herabtropfenden Badmaterials oder Art und Weise der Ultrafiltration des Badmaterials oder des Spülwassers o.ä.). Als Einbrenntemperaturen/Einbrennzeiten kommen die für das jeweilige Bindemittel zur Erzielung optimaler Eigenschaften am besten geeigneten oder empfohlenen Bedingungen in Frage.

Zur kathodischen Elektrotauchlackierung wird i.a. nach Neutralisation mit einer anorganischen oder organischen Säure durch Verdünnen mit deionisiertem Wasser ein Feststoffgehalt von 5 bis 20 Gew.% eingestellt. Die Abscheidung erfolgt, wie z.B. in DE-OS 27 11 425 beschrieben, bei Temperaturen von 15 bis 40°C während einer Zeit von 1 bis 2 Minuten bei Bad-pH-Werten von 6,5 bis 9,0, vorzugsweise von 7,3 bis 8,5, und einer Abscheidungsspannung zwischen 50 und 500 Volt. Nach dem Abspülen des auf dem elektrisch leitenden Körper kathodisch abgeschiedenen Films wird dieser bei etwa 160 bis 220°C 10 bis 30 Minuten, vorzugsweise bei 170 bis 200°C 20 Minuten gehärtet. Im übrigen sind die von den Herstellern der jewei-

ligen, für die kathodische Elektrotauchlackierung geeigneten Bindemittel angegeben, optimalen Beschichtungsbedingungen zu beachten.

Als zu beschichtende Substrate kommen alle elektrisch leitenden Metallteile, wie Bleche und Formstücke aus Messing, Kupfer, Aluminium, Eisen und Stahllegierungen in Frage, die gegebenenfalls chemisch vorbehandelt, z.B. zink- oder eisenphosphatiert sind, insbesondere Eisenmetalle und Eisenlegierungen.

Unter Eisenmetallen werden im Rahmen dieser Erfindung Eisen, Stahl und Eisenlegierungen mit anderen Metallen (z.B. verschiedene Stahlsorten) verstanden.

Die im folgenden und den Beispielen angegebenen Teile und Prozente sind Gewichtsteile bzw. Gewichtsprozente.

Herstellung des kationisch abscheidbaren Bindemittels A

Wie in DE-OS 23 20 301 beschrieben, wird ein Bindemittel auf der Basis von Mannich-Kondensationsprodukten hergestellt.

Zu 1100 Teilen Bisphenol A, 917,5 Teilen Diethanolamin, 332,5 Teilen Di-2-methoxyethylamin und 375 Teilen Isopropanol werden bei 20 bis 25°C 984 Teile Formalin (40%ig) zugetropft. Man läßt eine Stunde lang bei 30°C rühren und erhitzt dann auf 80°C (3 Stunden). Unter schwachem Vakuum werden Isopropanol und Wasser abdestilliert. Man erhält ein Mannich-Kondensationsprodukt in Form einer gelblichen harzähnlichen Masse mit einem Festgehalt von ca. 91 Gew.%.

2542 Teile dieses Mannich-Kondensationsproduktes werden mit 70 Teilen Paraformaldehyd versetzt und 9 bis 10 Stunden bei 70°C kondensiert. Das viskose Produkt hat einen Festgehalt von ca. 90 Gew.%.

Hiervon werden 544 Teile der Mannichbase mit 136,5 Teilen eines handelsüblichen Reaktionsproduktes aus Bisphenol A und Epichlorhydrin (Epoxidwert 0,2) und 54,5 Teilen eines handelsüblichen Reaktionsproduktes aus Pentaerythrit und Epichlorhydrin (Epoxidwert 0,57) unter Verwendung von 34 Teilen Dimethylglykolether drei Stunden bei 60°C zur Reaktion gebracht. Man erhält ein klares, viskoses Harz mit einem mittleren Molgewicht von 860 und einem Restformaldehyd-Gehalt von 0,3 %. Der Festkörpergehalt beträgt 70 %.

Herstellung des kationisch abscheidbaren Bindemittels B

Die Herstellung des Bindemittels B ist beispielsweise in der deutschen Patentanmeldung P 31 24 088.7 beschrieben; sie erfolgt in folgenden Stufen.

a) Tscherniac-Einhorn/Michael-Reaktion:

Zunächst werden 357,3 Teile eines Phenolgruppen enthaltenden Indenharzes mit einem Gehalt von 6,1 % phenolischen OH-Gruppen, 91,0 Teile Acrylamid, 53,1 Teile Paraformaldehyd, 0,2 Teile Phenothiazin und 62 Teile Toluol bei 115°C gelöst. Man kühlt auf 60°C ab und gibt 0,7 Teile Bortrifluoridethyletherat hinzu. Nach 30 Minuten Reaktion bei 60°C erfolgt die weitere Zugabe von 0,7 Teilen und nach weiteren 30 Minuten nochmals von 0,4 Teilen Bortrifluoridethyletherat. Man läßt unter Rühren 3 Stunden bei 60°C nachreagieren; anschließend wird bei 120°C Wasser

ausgekreist. Dann tropft man bei 90°C 134,6 Teile Diethanolamin zu und läßt noch 2 Stunden bei 90°C nachreagieren. Schließlich wird mit 50 Teilen Isopropanol und 50 Teilen Isobutanol verdünnt; der Feststoffgehalt beträgt 78,2 %.

b) Mannich-Reaktion:

268,5 Teile des zuvor beschriebenen Tscherniac-Einhorn-Michael-Produktes, 82,5 Teile Bisphenol A, 26,7 Teile Paraformaldehyd, 95,6 Teile Di-n-butylamin, 70 Teile Isopropanol und 35 Teile Isodecanol werden 15 Minuten bei 50°C und anschließend 150 Minuten bei 80°C gerührt. Dann erfolgt die Zugabe von 142 Teilen eines Diglycidylethers aus Bisphenol A und Epichlorhydrin mit einem Epoxidwert von 0,1 und 47 Teilen Toluol. Nach weiteren 30 Minuten bei 75 bis 80°C werden 103 Teile eines Diglycidylethers aus Bisphenol A und Epichlorhydrin mit einem Epoxidwert von 0,2, 56 Teile eines Triglycidylthers aus Pentaerythrit und Epichlorhydrin mit einem Epoxidwert von 0,62, 24 Teile Isopropanol und 50 Teile Ethylglykol zugegeben. Bei 70°C läßt man nachreagieren, bis eine Viskosität von 440 mPa.s, gemessen bei 75°C mit dem ICI-Platte-konus-Viskosimeter, erreicht ist. Die Reaktion wird durch Zugabe von 7 Teilen Mercaptoethanol abgebrochen. Der Feststoffgehalt beträgt 69,5 %.

c) Mischung (= Bindemittel B):

75 Teile des nach der Mannich-Reaktionsstufe erhaltenen Festharzes b) und 25 Teile des nach der Tscherniac-Einhorn-Michael-Reaktionsstufe gewonnenen Festharzes a) sowie 3,4 Teile eines hochsiedenden $C_{12}$-$C_{14}$-Alkohols (z.B. Alfol® 1214/4 der Fa. Condea) werden gemischt.

Herstellung des kationisch abscheidbaren Bindemittels C:

a) Zu 174 Teilen Toluylendiisocyanat werden bei 10 bis 15°C 133 Teile 2-Ethylhexanol langsam zugetropft; nach Zulaufende wird noch 1 Stunde bei 15 bis 20°C nachgerührt.

b) Zu 500 Teilen eines nach bekannten Verfahren hergestellten Diglycidylethers des Bisphenol A mit einem Epoxidwert von 0,205, aufgeschmolzen und mit 125 Teilen Methylisobutylketon verdünnt, wird das unter a) beschriebene Vorprodukt bei 60°C zugesetzt; die gesamte Mischung reagiert 3 Stunden bei 60°C nach. Zuletzt wird das Reaktionsprodukt mit 225 Teilen Isopropanol auf einen Festgehalt von ca. 70 % verdünnt.

c) 578,5 Teile des unter b) beschriebenen Reaktionsproduktes, 50,4 Teile Diethanolamin und 21,6 Teile Isopropanol werden 4 Stunden lang bei 60°C zur Reaktion gebracht; anschließend werden 20 Teile Essigsäure und 50 Teile $H_2O$ eingearbeitet; Festgehalt des Harzes ca. 62 %.

In den nachfolgenden Beispielen wird u.a. auf den Salzsprühtest nach ASTM-B-117-64 hingewiesen, wobei die Wirksamkeit der erfindungsgemäßen Zusätze sich vor allem auf blanke Stahlbleche, die also keiner Vorbehandlung wie Phosphatierung, Chromatierung o.ä. unterworfen waren, bezieht. Stahlbleche, die zuvor durch eine Zn- oder Fe-Phosphatierung mit oder ohne anschließender Chromatierung vorbehandelt sind, zeigen naturgemäß bereits einen guten Korrosionsschutz, der durch die Verwendung der erfindungsgemäßen Zusätze noch verbessert wird. Die Wirksamkeit der erfindungsgemäßen Zusätze läßt sich am deutlichsten an nicht vorbehandelten Stahlblechen demonstrieren.

Vergleichsbeispiel 1

Zur Herstellung eines kataphoretisch abscheidbaren Elektrotauchlackes werden 307,4 Teile des kathodisch abscheidbaren Bindemittels A mit 3,9 Teilen Essigsäure (100 %) neutralisiert. Anschließend werden 463,6 Teile einer auf einem Dreiwalzenstuhl hergestellten Pigmentpaste eingearbeitet; diese Pigmentpaste setzt sich zusammen aus:

| | | |
|---|---|---|
| 220,0 | Teilen | des kathodisch abscheidbaren Bindemittels A |
| 2,8 | " | Essigsäure, 100 % |
| 48,0 | " | Talkum |
| 53,0 | " | Titandioxid (Rutil-Type) |
| 9,8 | " | Ruß |
| 30,0 | " | aliphatischer Fettalkohole mit 10 bis 14 C-Atomen |
| 100,0 | " | Isopropanol |

Die Mischung wird mit deionisiertem Wasser auf einen Festkörpergehalt von 12 % verdünnt und vor der Erstabscheidung 48 Stunden bei 30°C gerührt. Der pH-Wert des fertigen ET--Lackes beträgt 8.1.

In dieses Beschichtungsbad werden eine Graphitplatte als Anode und ein entfettetes Stahlblech (nicht phosphatiert, ohne jede Vorbehandlung) als zu beschichtende Kathode eingetaucht. Die Kathode wird 2 Minuten lang bei einer Gleichspannung von 200 Volt beschichtet; während der Beschichtung wird das Bad-Material gerührt und auf einer Temperatur von 30°C gehalten. Nach der Beschichtung wird die Kathode aus dem Bad entfernt, mit deionisiertem Wasser gespült und mit Luft abgeblasen; der Überzug auf dem Stahlblech wird 20 Minuten lang bei 190°C eingebrannt. Der eingebrannte Überzug hat eine Schichtstärke von 18 µm; beim Salzsprühtest gemäß ASTM-B-117-64 beträgt die einseitig vom Schnitt gemessene Unterwanderung nach 168 Stunden Belastung mehr als 10 mm.

Vergleichsbeispiel 2

Wie in Vergleichsbeispiel 1 beschrieben, werden zur Herstellung eines kathodisch abscheidbaren ET-Lackes 307,4 Teile des Bindemittels A mit 3,9 Teilen Essigsäure (100 %) neutralisiert. Zu dieser Mischung werden zusätzlich 22,6 Teile einer 5%igen Lösung von Kupferacetat, Cu $(CH_3COO)_2 \cdot H_2O$, in $H_2O$ eingearbeitet. Die weiteren Verfahrensschritte (Art und Menge der Mahlpaste, Verdünnung und Badkonzentration, Ausrühren, Abscheiden und Einbrennen) sind in Vergleichsbeispiel 1 beschrieben. Das ET-Bad weist einen pH-Wert von 8,5 auf.

Der auf dem entfetteten Stahlblech eingebrannte Überzug besitzt eine Schichtstärke von 18 µm; beim Salzsprühtest gemäß ASTM-B-117-64 beträgt die einseitige vom Schnitt gemessene Unterwanderung nach 168 Stunden Belastung 4,0 mm.

Beispiel 1

Wie in Vergleichsbeispiel 1 beschrieben, werden 307,4 Teile des kathodisch abscheidbaren Bindemittels A mit 3,9 Teilen Essigsäure (100%ig) neutralisiert. Anschließend werden 467,3 Teile einer auf einem Dreiwalzenstuhl hergestellten Pigmentpaste eingearbeitet, die sich wie folgt zusammensetzt:

| | | |
|---|---|---|
| 220,0 | Teile | des kathodisch abscheidbaren Bindemittels A |
| 2,8 | " | Essigsäure, 100 % |
| 3,7 | " | Tetramethylthiuramdisulfid |
| 48,0 | " | Talkum |
| 53,0 | " | Titandioxid (Rutil-Type) |
| 9,8 | " | Ruß |
| 30,0 | " | aliphatische Fettalkohole mit 10 bis 14 C-Atomen |
| 100,0 | " | Isopropanol |

Die Mischung wird mit deionisiertem Wasser auf einen Festkörpergehalt von 12 % verdünnt und vor der Erstabscheidung 48 Stunden bei 30°C gerührt; der pH-Wert dieses Lackes beträgt 8,2.

Der fertige ET-Lack wird in zwei gleich große Hälften geteilt:

Beispiel 1/1

Wie in Vergleichsbeispiel 1 beschrieben, wird ein entfettetes Stahlblech als Kathode geschaltet unter Anlegen einer Gleichspannung von 190 Volt beschichtet; nach dem Einbrennen besitzt der glattverlaufende, harte Überzug eine Schichtstärke von 18 µm; beim Salzsprühtest beträgt die einseitig vom Schnitt gemessene Unterwanderung nach 168 Stunden Belastung 5 mm.

Beispiel 1/2

In die zweite Hälfte des oben beschriebenen ET-Bades werden langsam 11,3 Teile einer 5%igen Lösung von Kupferacetat, $Cu\ (CH_3COO)_2 \cdot H_2O$, in Wasser eingerührt.

Nach Abscheidung und der oben beschriebenen üblichen Weiterverarbeitung beträgt die Schichtstärke des glattverlaufenden, harten Überzuges auf dem entfetteten Stahlblech ca. 17 µm; beim Salzsprühtest nach ASTM-B-117-64 beträgt der Wert der Unterwanderung nach 168 Stunden Belastung, halbseitig vom Schnitt aus gemessen, 2,5 mm.

Vergleichsbeispiel 3

Zur Herstellung eines Elektrotauchbades werden 559 Teile des kathodisch abscheidbaren Bindemittels B (nicht flüchtiger Einbrennrückstand 2 Stunden/125°C = 69,8 %) mit 6,1 Teilen Essigsäure (100%ig) neutralisiert. Sodann werden 300,4 Teile einer Pigmentpaste zugesetzt. Diese Pigmentpaste setzt sich zusammen aus:

| | | |
|---|---|---|
| 129,0 | Teilen | des mit Essigsäure neutralisierten Bindemittels B |
| 1,4 | " | Essigsäure, 100 % |
| 54,4 | " | China Clay |
| 54,4 | " | Titandixoid (Rutiltype) |
| 11,2 | " | Ruß |
| 20,0 | " | aliphatischer Fettalkohole mit 10 bis 14 C-Atomen |
| 30,0 | " | Isopropanol |

Diese genannten Mengen und Substanzen werden auf einem Dreiwalzenstuhl zu ausreichender Homogenität angerieben.

Die gesamte Mischung wird mit deionisiertem Wasser auf einen Festkörpergehalt von 15 % verdünnt und vor der ersten elektrophoretischen Abscheidung 48 Stunden lang bei 30°C gerührt. Der pH-Wert des fertigen Elektrotauchlackes beträgt 6,40.

In das Beschichtungsbad werden eine Graphitplatte als Anode und ein entfettetes Stahlblech, das sonst keiner weiteren Vorbehandlung wie Phosphatierung oder Chromatierung unterzogen worden ist, als Kathode eingetaucht; die Beschichtung bei einer Gleichspannung von ca. 80 Volt ist nach 2 Minuten beendet; das Beschichtungsbad wird während des Beschichtens schwach gerührt und auf einer Temperatur von 30°C gehalten.

Nach der Beschichtung wird die Kathode (= beschichtetes Substrat) aus dem Elektrotauch-Bad entnommen, mit deionisiertem Wasser gespült und mit Luft abgeblasen. Danach wird die Beschichtung auf dem Blech 20 Minuten bei 190°C eingebrannt. Der eingebrannte Überzug auf dem entfetteten Stahlblech hat eine Schichtdicke von 19/um. Die glatten, nach dem Einbrennen gut verlaufenden Lackierungen weisen beim Salzsprühtest nach ASTM-B-117-64 nach 144 Stunden Belastung eine halbseitig vom Schnitt gemessene Unterwanderung von 3,6 mm auf.

Vergleichsbeispiel 4

Für die Herstellung des Elektrotauchlackes werden 37,7 Teile einer wäßrigen Lösung von Cu (II) $(CH_3COO)_2 \cdot H_2O$ in 559 Teilen des kathodisch abscheidbaren Bindemittels B eingearbeitet; die Mischung wird sodann mit 6,1 Teilen Essigsäure (100%ig) neutralisiert.

Mahlpaste (Zusammensetzung und Menge), Homogenisierung, Verdünnung und Beschichtungsbedingungen wie in Vergleichsbeispiel 3; Bad-pH-Wert beträgt 6,3. Der nach dem Einbrennen harte Überzug, der einen guten Verlauf aufweist, zeigte bei einer Schichtstärke von 19/um nach 144 Stunden Belastung im Salzsprühtest nach ASTM-B-117-64 eine halbseitig gemessene Unterwanderung vom Schnitt von 2,2 mm.

Beispiel 2

Bei der Herstellung eines Elektrotauchlackes werden 559 Teile des kathodisch abscheidbaren Bindemittels B mit 6,1 Teilen Essigsäure neutralisiert. Sodann werden 305,2 Teile einer Pigmentpaste zugesetzt, die sich wie folgt zusammensetzt:

| | | |
|---|---|---|
| 129,0 | Teile | des mit Essigsäure neutralisierten Bindemittels B |
| 1,4 | " | Essigsäure (100 %) |
| 4,8 | " | Tetramethylthiuramdisulfid |
| 54,4 | " | China Clay |
| 54,4 | " | Titandioxid (Rutiltype) |
| 11,2 | " | Ruß |
| 20,0 | " | aliphatische Fettalkohole mit 10 bis 14 C-Atomen |
| 30,0 | " | Isopropanol |

Die Bestandteile der Mahlpaste werden auf einem Dreiwalzenstuhl zu ausreichender Kornfeinheit angerieben.

Die gesamte Mischung wird mit deionisiertem Wasser auf einen Festkörpergehalt von 15 % verdünnt und vor der ersten elektrophoretischen Abscheidung 48 Stunden lang bei einer Badtemperatur von 30°C gerührt. Der pH-Wert des fertigen Elektrotauchlackes beträgt 6,3.

Dieses Beschichtungsbad wird in zwei gleiche Teile geteilt.

Beispiel 2/1

Wie in Vergleichsbeispiel 3 beschrieben, werden eine Graphitelektrode als Anode und ein entfettetes Stahlblech, das sonst keine weitere Vorbehandlung erfahren hat, als Kathode in die

eine Hälfte (= Bad 1) eingetaucht; die Beschichtung bei einer Gleichspannung von 80 Volt ist nach 2 Minuten beendet; das Bad wird während der Beschichtung leicht gerührt und auf einer Temperatur von 30°C gehalten.

Nach der Beschichtung wird die Kathode (= beschichtetes Substrat) aus dem ETL-Bad entnommen, mit deionisiertem Wasser gespült und mit Luft abgeblasen. Danach wird die Beschichtung auf dem Blech 20 Minuten lang bei 190°C eingebrannt. Der eingebrannte Überzug auf dem nicht vorbehandelten Stahlblech hat eine Schichtstärke von 19 µm. Beim Salzsprühtest nach ASTM-B-117-64 wird nach 144stündiger Belastung eine halbseitig vom Schnitt gemessene Unterwanderung von 3,0 mm gemessen.

Beispiel 2/2

In die 2. Hälfte des wie oben beschriebenen ET-Lackes wurden 18,85 Teile einer 5%igen Lösung von Kupferacetat, $Cu(CH_3COO)_2 \cdot H_2O$, in Wasser eingerührt und dann wie bei Beispiel 2/1 beschrieben weiter verfahren. Bei einer Schichtstärke von 18 µm des mit gutem Verlauf eingebrannten, harten Überzuges weist dieser im Salzsprühtest nach ASTM-B-117-64 nach 144stündiger Belastung eine halbseitig vom Schnitt aus gemessene Unterwanderung von 1,6 mm auf.

Beispiel 3

Für ein Elektrotauchbad werden 559 Teile des kathodisch abscheidbaren Bindemittels B mit 6,1 Teilen Essigsäure (100 %) neutralisiert. Sodann werden 305,2 Teile einer Pigmentpaste zugesetzt. Diese Pigmentpaste setzt sich zusammen aus:

| | | |
|---|---|---|
| 129,0 | Teilen | des mit Essigsäure neutralisierten Bindemittels B |
| 1,4 | " | Essigsäure (100 %) |
| 2,8 | " | Benzothiazyl-2-Sulfenmorpholid |
| 1,0 | " | Tetramethylthiuramdisulfid |
| 1,0 | " | sublimierter Schwefel |
| 54,4 | " | China Clay |
| 54,4 | " | Titandioxid (Rutiltype) |
| 11,2 | " | Ruß |
| 20,0 | " | aliphatischer Fettalkohole mit 10 bis 14 C-Atomen |
| 30,0 | " | Isopropanol |

Diese genannten Mengen und Substanzen werden auf einem Dreiwalzenstuhl zu ausreichender Homogenität angerieben.

Die gesamte Mischung wird mit deionisiertem Wasser auf einen Festkörpergehalt von 15 % verdünnt und vor der ersten elektrophoretischen Abscheidung 48 Stunden lang bei 30°C gerührt. Der pH-Wert des ET-Lackes beträgt 6,20.

In das Beschichtungsbad werden eine Graphitelektrode als Anode und ein entfettetes Stahlblech (ohne irgendeine Vorbehandlung) als Kathode eingetaucht; die Beschichtung bei einer Gleichspannung von 80 Volt erfolgt 2 Minuten lang (Badtemperatur 30°C; Badmaterial wird schwach gerührt).

Nach der Beschichtung wird die Kathode (= beschichtetes Substrat) mit deionisiertem Wasser gespült und mit Luft abgeblasen. Die Beschichtung wird 20 Minuten lang bei 190°C eingebrannt; sie weist eine Schichtstärke von 20 $\mu$m auf. Die glatten, nach dem Einbrennen gut verlaufenden, harten Lackierungen weisen beim Salzsprühtest nach ASTM-B-117-64 nach 144stündiger Belastung eine halbseitig gemessene Unterwanderung vom Schnitt von 1,7 mm auf.

Vergleichsbeispiel 5

158 Teile des Bindemittels C und 2 Teile Dibutylzinndilaurat werden gemischt und mit 840 Teilen vollentsalzten Wassers verdünnt. Der Klarlack wird 48 Stunden bei 30°C gerührt; der pH-Wert des Klarlacks beträgt 5,30. Das Beschichtungsbad wird in zwei gleiche Hälften geteilt.

Vergleichsbeispiel 6

In die erste Hälfte werden eine Graphitelektrode als Anode und ein entfettetes, keiner irgendwie gearteten Vorbehandlung (Phosphatierung, Chromatisierung o.ä.) unterworfenes Stahlblech, als Kathode geschaltet, eingetaucht. Die Kathode wird 2 Minuten lang mit einem Gleichstrom von 20 Volt beschichtet; der abgeschiedene Lackfilm wird gespült und 20 Minuten lang bei 190°C eingebrannt; es resultiert ein glatter und harter Überzug mit einer Schichtstärke von 27 µm. Beim Salzsprühtest nach ASTM-B-117-64 beträgt die einseitig vom Schnitt aus gemessene Unterwanderung nach einer Belastung von 168 Stunden 3,0 mm.

Vergleichsbeispiel 7

In die 2. Hälfte des Beschichtungsbades werden 9,2 Teile einer 5%igen wäßrigen Lösung von Pb $(CH_3COO)_2 \cdot 3\ H_2O$ eingerührt und wie vorstehend beschrieben, ein entfettetes, nicht vorbehandeltes Stahlblech, als Kathode geschaltet, elektrophoretisch beschichtet (Dauer: 2 Minuten; angelegte Gleichspannung: 30 Volt). Das Substrat wird aus dem Beschichtungsbad entfernt, mit deionisiertem Wasser gespült und der Lackfilm 20 Minuten bei 190°C eingebrannt; die Schichtstärke des glatten Klarlack-Films beträgt 28 µm. Salzsprühtest nach ASTM-B-117-64 nach 168 Stunden Belastung:

die halbseitig vom Schnitt aus gemessene Unterwanderung beträgt 0,8 mm.

Beispiel 4

158 Teile des Bindemittels C, 2 Teile Dibutylzinndilaurat und 1 Teil Tetramethylthiuramdisulfid werden innig gemischt und mit 839 Teilen deionisiertem Wasser verdünnt. Der Klarlack wird, wie in Beispiel 8 beschrieben, 48 Stunden bei 30°C gerührt; der pH-Wert des Klarlacks beträgt 5,3.

Das Beschichtungsbad wird geteilt.

Beispiel 4/1

In die erste Hälfte des vorstehend beschriebenen Beschichtungsbades werden eine Graphitelektrode als Anode und ein entfettetes, nicht vorbehandeltes (ohne Phosphatierung, Chromatierung o.ä.) Stahlblech, als Kathode geschaltet, eingetaucht. Die Kathode wird 2 Minuten lang mit einer Gleichspannung von 20 Volt elektrophoretisch beschichtet (Badtemperatur 30°C; das Bad wird leicht gerührt). Der abgeschiedene Lackfilm wird mit deionisiertem Wasser gespült und 20 Minuten lang bei 190°C eingebrannt; der glatte und harte Überzug weist eine Schichtstärke von 28 µm auf. Im Salzsprühtest nach ASTM-B-117-64 wird eine Unterwanderung (halbseitig vom Schnitt aus gemessen) von 1,8 mm beobachtet (168 Stunden Belastung).

Beispiel 4/2

In ähnlicher Weise wie in Vergleichsbeispiel 7 beschrieben, werden 9,2 Teile einer 5%igen wäßrigen Lösung von Pb $(CH_3COO)_2 \cdot 3\ H_2O$ eingerührt und wie vorstehend (Beispiel 4/1) beschrieben, ein entfettetes, nicht vorbehandeltes Stahlblech, als Kathode geschaltet, elektrophoretisch beschichtet (Dauer 2 Minuten; angelegte Gleichspannung = 20 Volt; Badtemperatur 30°C; das Bad wird leicht gerührt). Das beschichtete Substrat wird aus dem ET-Bad entfernt, der abgeschiedene Lackfilm mit deionisiertem Wasser gespült und 20 Minuten bei 190°C eingebrannt; die Schichtstärke des glatten Klarlack-Überzuges beträgt 25 µm. Im Salzsprühtest nach ASTM-B-117-64 werden nach 168 Stunden Belastung eine halbseitig vom Schnitt aus gemessene Unterwanderung von 0,5 mm ermittelt.

Patentansprüche

1. Kathodisch abscheidbare Elektrotauchlacke, bestehend aus Bindemitteln auf Basis stickstoffbasische Gruppen tragender Polyadditions-, Polykondensations- oder Polymerisationsprodukte, die durch Zusatz von Säuren wasserverdünnbar sind, gegebenenfalls Pigmenten und/oder Füllstoffen in üblichen Bindemittel/Pigment-Verhältnissen sowie gegebenenfalls anderen Hilfsstoffen und Wasser, dadurch gekennzeichnet, daß sie einen Zusatz von elementarem Schwefel und/oder einer oder mehrerer organischer N-haltiger Thioverbindungen mit Gruppierungen der Formeln

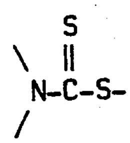 (I) und/oder 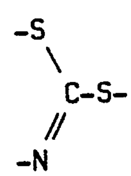 (II)

enthalten.

2. Elektrotauchlacke nach Anspruch 1, dadurch gekennzeichnet, daß das Bindemittel auf Basis stickstoffbasische Gruppen tragender Polyadditions-, Polykondensations- oder Polymerisationsprodukte weniger als 1 Äquivalent an olefinischen Doppelbindungen/1000 g enthält.

3. Elektrotauchlacke nach Anspruch 1 oder 2, dadurch gekennzeichnet, daß der Gehalt an elementarem Schwefel und/oder organischen N-haltigen Thioverbindungen 0,005 bis 5 Gew.%, bezogen auf Bindemittel, beträgt.

4. Elektrotauchlacke nach Anspruch 1, 2 oder 3, dadurch gekennzeichnet, daß die organische, stickstoffhaltige Thioverbindung ein Metallsalz einer N-disubstituierten Dithiocarbaminsäure ist.

5. Elektrotauchlacke nach einem der vorhergehenden Ansprüche, dadurch gekennzeichnet, daß die organische, stickstoffhaltige Thioverbindung ein Thiuram- und/oder Thiazolderivat ist.

6. Elektrotauchlacke nach einem der vorgehenden Ansprüche, dadurch gekennzeichnet, daß sie einen Zusatz eines Metallsalzes, dessen Potential in der elektrolytischen Spannungsreihe der Kationen höher als das Potential der Eisenmetalloberflächen ist, in einer Menge von 1 bis 5000 mg/kg Bindemittel enthalten.

7. Elektrotauchlacke nach Anspruch 6, dadurch gekennzeichnet, daß sie als Metallsalz einen Zusatz von Cu-Ionen in Mengen von 1 bis 5000 mg/kg Bindemittel und als N-haltige Thioverbindung ein Thiuramderivat, wie Tetramethylthiuramdisulfid in Mengen von 0,005 bis 5 Gew.%, bezogen auf das Bindemittel, enthalten.

8. Verfahren zur Herstellung wäßriger kathodisch abscheidbarer Elektrotauchlacke nach einem der Ansprüche 1 bis 7 aus Bindemitteln auf Basis stickstoffbasische Gruppen tragender Polyadditions-, Polykondensations- oder Polymerisationsprodukte, die durch Zusatz von Säuren wasserverdünnbar sind, gegebenenfalls Pigmenten und/oder Füllstoffen in üblichen Bindemittel/Pigment-Verhältnissen sowie gegebenenfalls anderen Hilfsstoffen und Wasser, dadurch gekennzeichnet, daß dem Elektrotauchlack, dem Bindemittel, den Pigmenten oder Füllstoffen elementarer Schwefel

und/oder ein oder mehrere organische, N-haltige Thioverbindungen mit Gruppierungen der Formeln (I) und/oder (II) nach Anspruch 1 in solchen Mengen zugefügt und darin dispergiert werden, daß der Gehalt an elementarem Schwefel und/oder organischen, N-haltigen Thioverbindungen 0,005 bis 5 Gew.%, bezogen auf das Bindemittel, beträgt.

9. Verfahren nach Anspruch 8, dadurch gekennzeichnet, daß der elementare Schwefel und/oder die organische, N-haltige Thioverbindung mit Gruppierungen der Formeln (I) und/oder (II) nach Anspruch 1 bei der Herstellung der pigmentierten Mahlpasten oder der Lackkonzentrate zugefügt wird.

10. Verwendung der kathodisch abscheidbaren Elektrotauchlacke nach einem der Ansprüche 1 bis 7 zur kathodischen Elektrotauchlackierung von Metallteilen oder zum Lackieren von Gegenständen nach anderen Lackierverfahren.